# EUROPEAN PATENT SPECIFICATION

(11) **EP 1 474 969 B1**
(45) Date of publication and mention of the grant of the patent: **31.05.2006**
(21) Application number: 04075844.3
(22) Date of filing: 16.03.2004
(51) Int. Cl.: A01J 9/00, A01J 9/04

(54) **A device for milking an animal, with a milk tank**
Vorrichtung zum Melken eines Tieres mit einem Milchtank
Dispositif pour la traite d'un animal avec un réservoir à lait

(30) Priority: 05.05.2003 NL 1023341
(43) Date of publication of application: 10.11.2004
(73) Proprietor: Lely Enterprises AG, 6300 ZUG (CH)
(72) Inventor: Fransen, Renatus Ignatius Joséphus, 3135 ZD Vlaardingen (NL); Meijer, Eduard Lodewijk, 2514 HL Den Haag (NL)
(74) Representative: Corten, Maurice Jean F.M.

(56) References cited:
- EP-A- 0 797 915
- WO-A-02/074069
- US-A- 1 534 628
- US-A- 6 079 359

## Description

The invention relates to a device for milking an animal, with a milk tank comprising a flexible bag. A device for milking according the preamble of claim 1 is already known from US-A-1,534,622.

Such a device with a milk tank is also known from WO 00/35271. This document discloses a flexible bag that is disposed in a holder with stiff walls surrounding the flexible bag in a supporting manner. The flexible bag is round, so that it can be cleaned in a simple manner.

The invention aims at providing an alternative device with a milk tank comprising a flexible bag.

The device for milking an animal is provided, with a milk tank comprising a flexible bag, wherein the flexible bag is self-supporting. In this manner a holder for supporting the flexible bag is not necessary, so that the milk tank can be of relatively cheap design.

If the flexible bag is made of recyclable material, the flexible bag can be used one single time and be recycled immediately thereafter, so that cleaning of the bag is no longer necessary. In this manner a very sterile storage of milk is obtained. A

According to the invention the device comprises a cooling element, the flexible bag being disposed on the cooling element. In this manner an efficient cooling of milk in the flexible bag can be obtained.

In order to obtain a uniform cooling of the milk present in the flexible bag the device according to the invention comprises a motion device for setting the cooling element in motion. As a result thereof the milk present in the flexible bag is also set in motion. The device comprises in particular an axis of rotation, and the motion device is in particular suitable for setting the cooling element in an oscillatory motion about the axis of rotation.

For obtaining a uniform cooling, milk present in the flexible bag can additionally be set in motion in that the device is provided with a pressure element and/or a rolling-up element for exerting a pressure on the flexible bag, which pressure element and/or rolling-up element are/is movable in a reciprocating manner over the upper side of the flexible bag. The pressure element and/or the rolling-up element preferably comprise(s) a roll.

Although it would be possible to transport the flexible bag as a whole to a milk factory, one side of the flexible bag is preferably provided with a closable milk outlet through which the milk can be removed from the flexible bag. For emptying the flexible bag, the side of the flexible bag being the same side as that comprising the closable milk outlet is preferably provided with a closable milk inlet, so that the milk inlet does not impede the emptying of the flexible bag.

The flexible bag can be emptied in a simple manner if the side of the flexible bag opposite to the closable milk outlet comprises a suspension element for suspending the flexible bag.

Alternatively the flexible bag can be emptied in a simple manner if the cooling element is provided with lifting means for causing the cooling element to incline towards the closable milk outlet.

The flexible bag can be emptied in a simple manner if the pressure element and/or the rolling-up element are/is movable in the direction of the closable milk outlet. The flexible bag has then preferably a lower side, and the device is preferably provided with a pushing device for pushing the pressure element and/or the rolling-up element onto said lower side.

For removing a flexible bag from the cooling element and for disposing thereon a new flexible bag, the flexible bag is provided with first gripping elements. The removal and installation of a flexible bag can take place in a simple manner if the pressure element and/or the rolling-up element are/is provided with second gripping elements for engaging the first gripping elements.

Although a stock of flexible milk bags is preferably constituted by separate flexible milk bags, it is also possible for the flexible milk bags to be interconnected for example by means of tear lines known per se. The device, in particular the pressure element and/or the rolling-up element, is then preferably provided with means for separating the milk bags from each other, i.e. for tearing the tear lines. Besides, the stock of flexible milk bags may be constituted by a tube-shaped length of milk bag material, the device, in particular the pressure element and/or the rolling-up element, being provided with sealing means for sealing the flexible milk bag. Thus it is possible to form flexible milk bags on the spot. Such sealing means are known per se. The pressure element and/or the rolling-up element are/is in particular provided with means for automatically providing a milk inlet and/or a milk outlet and/or gripping elements in a milk bag.

In order still to be able to collect milk during emptying the flexible bag, the device is provided with a line that can be connected to the flexible bag, the line being provided with a three-way switching element, and with a buffer vessel, which buffer vessel is provided with a flexible, self-supporting buffer bag. In this manner it is possible, by correctly adjusting the three-way switching element, to convey milk via the line either to the buffer bag or to the flexible milk bag, and from the buffer bag to the flexible milk bag.

The invention will be explained hereinafter in further detail with reference to exemplary embodiments shown in the drawing, in which:
Figure 1 shows diagrammatically in a perspective view a milk tank of a device according to the invention;
Figure 2 shows diagrammatically in side view a first embodiment of a milk tank of a device according to the invention with a pressure element that is movable in a reciprocating manner over the upper side of the flexible bag;
Figure 3 shows diagrammatically in side view a second embodiment of a milk tank of a device according to the invention with a pressure element that can be moved onto the lower side of the flexible bag, and
Figure 4 shows diagrammatically an embodiment of a device but not according to the invention, with a buffer bag.

The invention relates to a device for milking an animal. Such devices, in which milking takes place manually, semi-automatically or fully automatically, are known per se, 4350 and therefore only those device elements that are relevant to the invention will be described.

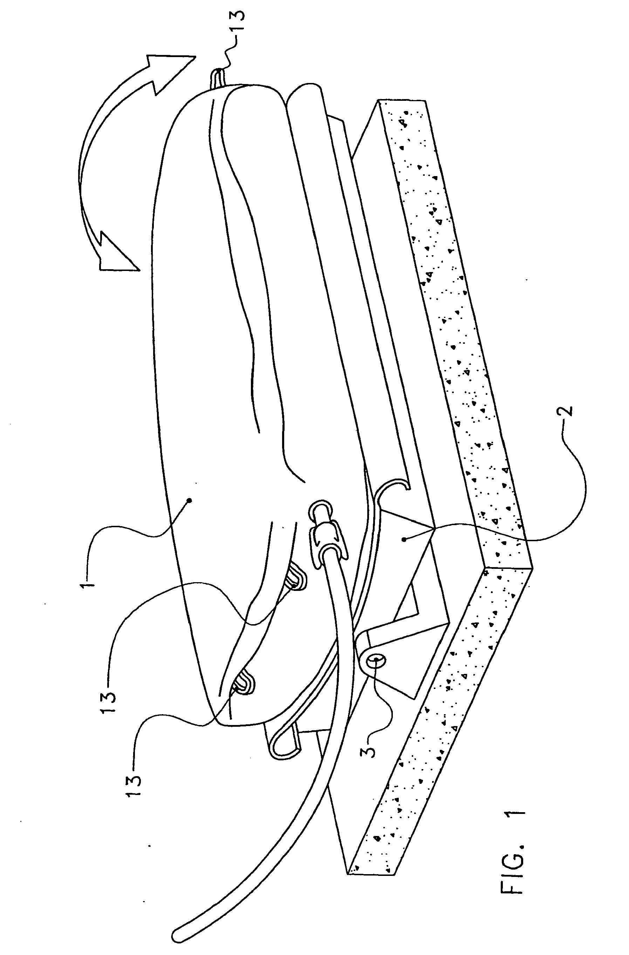

A device for milking an animal as shown in Figure 1 is provided with a milk tank comprising a flexible bag 1, hereafter called milk bag 1. The milk bag 1 is self-supporting, which implies that the milk bag 1 is not surrounded by sidewardly supporting walls, but only rests on a carrying bottom portion. In a non-shown embodiment the milk bag may also be suspended. The flexible bag is preferably made of recyclable material, for example fabric-reinforced synthetic material. In this manner the milk bag 1 can be used one single time, which promotes hygienic milk storage.

The milk bag 1 rests on a cooling element 2. The cooling of said cooling element 2 may take place in any known manner. The cooling may take place for example continuously, for example with the aid of ice water or with the aid of heat exchangers. Said cooling element 2 can be set in an oscillatory motion about an axis of rotation 3 by means of for example a (non-shown) driving motor. In this manner milk in the milk bag 1 is set in motion, which makes it possible to obtain a uniform milk cooling. It is noticed that setting the cooling element 2 in motion may also be carried out by other motion devices, for example cylinders.

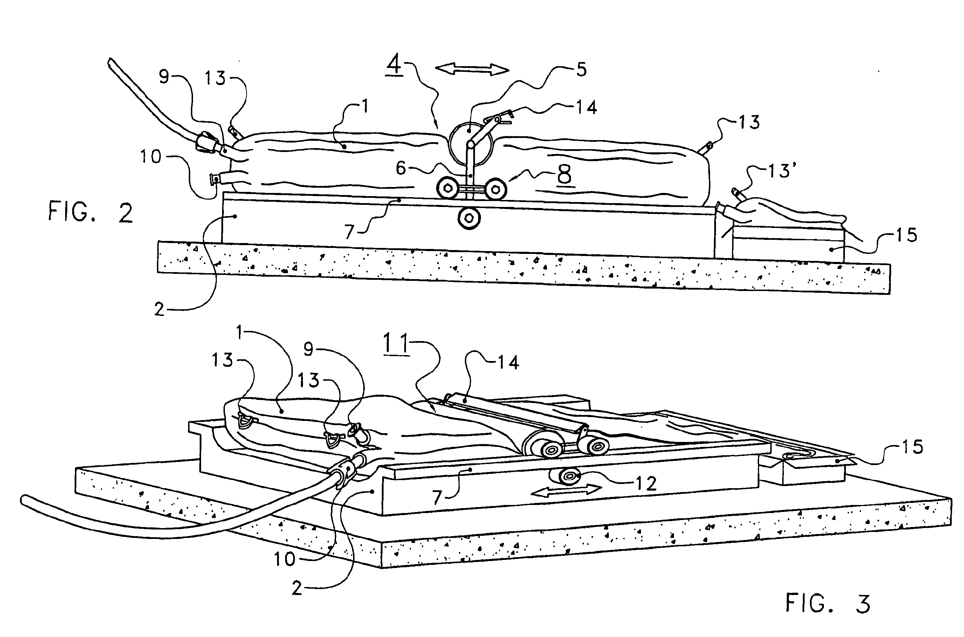

In the embodiment shown in Figure 2 milk in the milk bag 1 is set in motion by a pressure element and/or rolling-up element 4 that exerts a pressure on the milk bag 1, which pressure element and/or rolling-up element are/is movable in a reciprocating manner over the upper side of the milk bag 1. In the embodiment shown the pressure element and/or the rolling-up element are/is designed as a roll 5 that is connected to guide rolls 8 via an arm 6, which guide rolls 8 are movable in a reciprocating manner over a guide rail 7. The guide rail 7 is preferably disposed on the cooling element 2. In order not to be disturbed in the reciprocating motion by a milk inlet 9 and a milk outlet 10, said milk inlet 9 and milk outlet 10 are disposed on a side of the milk bag 1, preferably on the same side. In this embodiment the milk inlet 9 and the milk outlet 10 are closable. In the embodiment shown the pressure element and/or the rolling-up element 4 are/is movable in the direction of the closable milk outlet.

For emptying the milk bag 1 a separate pushing device 11 (as diagrammatically shown in Figure 3) may be used, which pushing device can be pushed onto the lower side of the milk bag 1. Said pushing device 11 is movable by means of guide rolls 12 in a reciprocating manner over the guide rail 7 and thus ensures the emptying of the milk bag 1. Alternatively the pressure element 4 may be used for this purpose, for example by making the arm 6 adjustable in length, for example with the aid of cylinders. The emptying of the milk bag may also take place by lifting the cooling element by means of cylinders in such a way that the milk bag is inclined downwardly in the direction of the milk outlet. In the case of a suspended milk bag the emptying of the milk bag is promoted by gravitational force.

The milk bag 1 is provided with first gripping elements 13 that simplify the installation of the milk bag 1 on the cooling element 2. The installation of the milk bag 1 on the cooling element 2 can be mechanized by providing the pressure element 4 (and/or the pushing device 11) with second gripping elements 14 that are capable of engaging the first gripping elements 13.

For emptying a milk bag 1 the pressure element and/or the rolling-up element 4 (and/or the pushing device 11) are/is moved in the direction of the milk outlet 10, the roll 5 completely pressing the milk bag 1 against the cooling element 2. When a small part of the milk bag 1 has been emptied, the empty part of the milk bag 1 is bent in such a way that the first gripping elements 13 engage the second gripping elements 14 at the rear of the milk bag 1. Then the milk bag 1 is emptied and rolled up simultaneously by the movement of the pressure element 4. After the milk bag 1 has been emptied completely, the pressure element 4 is moved in a direction away from the milk outlet 10, so that the emptied milk bag 1 comes free from the pressure element 4 and can be removed from the cooling element 2. The pressure element 4 moves to a stock 15 of new milk bags. The first gripping elements 13' (Figure 2) of the next milk bag are then brought in engagement with the second gripping elements 14 that are capable of pulling the new milk bag onto the cooling element 2.

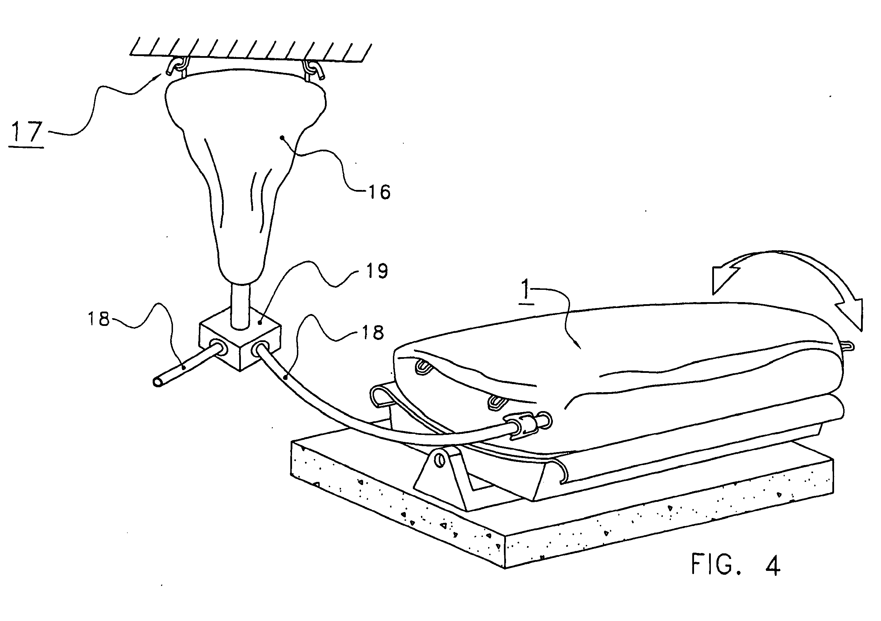

Although the emptying of a milk bag 1 may take place very quickly, it is desirable in some cases if in a line 18 to the milk bag 1 (or a conventional milk tank) there is included a three-way switching element 19 to which a flexible buffer bag 16 can be connected, as shown in Figure 4. This embodiment does not form a part of the invention. The flexible buffer bag 16 is suspended via suspension elements 17 and is closable in a way comparable to that of a bag for containing blood or infusion. The buffer bag may alternatively be supported on a support. The buffer bag may be balloon-shaped and be disposed in a shape-fitting manner over a connecting element of the three-way switching element. The buffer bag 16 is removably disposed on the three-way switching element 19. When the milk bag 1 is being emptied the milk obtained from a milking installation and flowing through the line can be conveyed to the buffer vessel by correctly adjusting the three-way switching element. After the milk bag 1 has been replaced the three-way switching element can be adjusted in such a way that milk present in the buffer bag will flow to the (new) milk bag. Then the buffer bag can be removed and recycled, and a new buffer bag can be installed. This also promotes hygiene. The flexible buffer bag 16 is preferably also made of recyclable material.

## Claims

1. A device for milking an animal, provided with a milk tank comprising a flexible bag (1) said flexible bag being self-supporting, **characterized in that** the device comprises a cooling element (2) the flexible bag being disposed on the cooling element, and **in that** the device comprises a motion device for setting the cooling element in motion.

2. A device as claimed in claim 1, **characterized in that** the device comprises an axis of rotation, and **in that** the motion device is suitable for setting the cooling element in an oscillatory motion about the axis of rotation.

3. A device as claimed in claim 1 or 2, **characterized in that** the device is provided with a pressure element and/or a rolling-up element for exerting a pressure on the flexible bag, which pressure element and/or rolling-up element are/is movable in a reciprocating manner over the upper side of the flexible bag.

4. A device as claimed in claim 3, **characterized in that** the pressure element and/or the rolling-up element comprise(s) a roll.

5. A device as claimed in any one of the preceding claims, **characterized in that** one side of the flexible bag is provided with a closable milk outlet.

6. A device as claimed in claim 5, **characterized in that** the side of the flexible bag opposite to the closable milk outlet comprises a suspension element for suspending the flexible bag.

7. A device as claimed in claims 1 and 5, **characterized in that** the cooling element is provided with lifting means for causing the cooling element to incline towards the closable milk outlet.

8. A device as claimed in claim 5, 6 or 7, **characterized in that** the side of the flexible bag being the same side as that comprising the closable milk outlet is provided with a closable milk inlet.

9. A device as claimed in claim 3 or 4, **characterized in that** the pressure element and/or the rolling-up element are/is movable in the direction of the closable milk outlet.

10. A device as claimed in claim 9, **characterized in that** the flexible bag has a lower side, and **in that** the device is provided with a pushing device for pushing the pressure element and/or the rolling-up element onto said lower side.

11. A device as claimed in any one of the preceding claims, **characterized in that** the flexible bag is provided with first gripping elements.

12. A device as claimed in claims 3 and 11, **characterized in that** the pressure element and/or the rolling-up element are/is provided with second gripping elements for engaging the first gripping elements.

13. A device as claimed in claim 3, **characterized in that** the pressure element and/or the rolling-up element are/is provided with sealing means for sealing the flexible milk bag.

14. A device as claimed in claim 3, **characterized in that** the pressure element and/or the rolling-up element are/is provided with means for automatically providing a milk inlet and/or a milk outlet and/or gripping elements in a milk bag.

15. A device as claimed in any one of the preceding claims, **characterized in that** the flexible bag is made of recyclable material.

16. A device as claimed in any one of the preceding claims, **characterized in that** the device is provided with a line that can be connected to the flexible bag, the line being provided with a three-way switching element, and with a buffer vessel, which buffer vessel is provided with a flexible, self-supporting buffer bag.

## Patentansprüche

1. Vorrichtung zum Melken eines Tieres, die einen Milchtank mit einem elastischen Beutel (1) aufweist, wobei der elastische Beutel selbsttragend ist,
**dadurch gekennzeichnet, daß** die Vorrichtung ein Kühlelement (2) umfaßt, wobei der elastische Beutel auf dem Kühlelement angeordnet ist, und daß die Vorrichtung eine Bewegungsvorrichtung umfaßt, um das Kühlelement in Bewegung zu versetzen.

2. Vorrichtung nach Anspruch 1,
**dadurch gekennzeichnet, daß** die Vorrichtung eine Drehachse umfaßt, und daß die Bewegungsvorrichtung geeignet ist, das Kühlelement in eine oszillierende Bewegung um die Drehachse zu versetzen.

3. Vorrichtung nach Anspruch 1 oder 2,
**dadurch gekennzeichnet, daß** die Vorrichtung mit einem Druckelement und/oder einem Aufrollelement versehen ist, um einen Druck auf den elastischen Beutel auszuüben, wobei das Druckelement und/oder das Aufrollelement über die Oberseite des elastischen Beutels hin- und herbewegbar sind/ist.

4. Vorrichtung nach Anspruch 3,
**dadurch gekennzeichnet, daß** das Druckelement und/oder das Aufrollelement eine Rolle umfassen/umfaßt.

5. Vorrichtung nach einem der vorhergehenden Ansprüche,
**dadurch gekennzeichnet, daß** eine Seite des elastischen Beutels mit einem verschließbaren Milchauslaß versehen ist.

6. Vorrichtung nach Anspruch 5,
**dadurch gekennzeichnet, daß** die von dem verschließbaren Milchauslaß abgewandte Seite des elastischen Beutels ein Aufhängelement zum Aufhängen des elastischen Beutels umfaßt.

7. Vorrichtung nach den Ansprüchen 1 und 5,
**dadurch gekennzeichnet, daß** das Kühlelement mit einer Hebevorrichtung versehen ist, um das Kühlelement in Richtung des verschließbaren Milchauslasses zu neigen.

8. Vorrichtung nach Anspruch 5, 6 oder 7,
**dadurch gekennzeichnet, daß** der elastische Beutel auf der Seite, auf der der verschließbare Milchauslaß angebracht ist, mit einem verschließbaren Milcheinlaß versehen ist.

9. Vorrichtung nach Anspruch 3 oder 4,
**dadurch gekennzeichnet, daß** das Druckelement und/oder das Aufrollelement in Richtung des verschließbaren Milchauslasses bewegbar sind/ist.

10. Vorrichtung nach Anspruch 9,
**dadurch gekennzeichnet, daß** der elastische Beutel eine Unterseite aufweist, und daß die Vorrichtung mit einer Drückvorrichtung versehen ist, um das Druckelement und/oder das Aufrollelement gegen die Unterseite zu drücken.

11. Vorrichtung nach einem der vorhergehenden Ansprüche,
**dadurch gekennzeichnet, daß** der elastische Beutel mit ersten Greifelementen versehen ist.

12. Vorrichtung nach den Ansprüchen 3 und 11,
**dadurch gekennzeichnet, daß** das Druckelement und/oder das Aufrollelement mit zweiten Greifelementen zum Eingriff in die ersten Greifelemente versehen ist.

13. Vorrichtung nach Anspruch 3,
**dadurch gekennzeichnet, daß** das Druckelement und/oder das Aufrollelement mit einer Verschlußvorrichtung zum Verschließen des elastischen Milchbeutels versehen sind/ist.

14. Vorrichtung nach Anspruch 3,
**dadurch gekennzeichnet, daß** das Druckelement und/oder das Aufrollelement mit einer Vorrichtung zum automatischen Anbringen eines Milcheinlasses und/oder eines Milchauslasses und/oder von Greifelementen an einem Milchbeutel versehen sind/ist.

15. Vorrichtung nach einem der vorhergehenden Ansprüche,
**dadurch gekennzeichnet, daß** der elastische Beutel aus einem rückgewinnbaren Material besteht.

16. Vorrichtung nach einem der vorhergehenden Ansprüche,
**dadurch gekennzeichnet, daß** die Vorrichtung mit einer Leitung versehen ist, die an den elastischen Beutel anschließbar ist, wobei die Leitung mit einem Dreiwege-Schaltelement und mit einem Pufferbehälter versehen ist, der einen elastischen selbsttragenden Pufferbeutel aufweist.

## Revendications

1. Dispositif de traite d'un animal, doté d'un réservoir de lait comprenant un sac flexible (1), ledit sac flexible étant autoportant, **caractérisé en ce que** le dispositif comprend un élément de refroidissement (2), le sac flexible étant disposé sur l'élément de refroidissement, et **en ce que** le dispositif comprend un dispositif de mouvement pour mettre en mouvement l'élément de refroidissement.

2. Dispositif selon la revendication 1, **caractérisé en ce que** le dispositif comprend un axe de rotation, et **en ce que** le dispositif de mouvement convient pour mettre en mouvement l'élément de refroidissement selon un mouvement oscillatoire autour de l'axe de rotation.

3. Dispositif selon la revendication 1 ou la revendication 2, **caractérisé en ce que** le dispositif est doté d'un élément de pression et/ou d'un élément d'enroulage pour exercer une pression sur le sac flexible, le(s)quel(s) élément de pression et/ou élément d'enroulage sont/est mobile(s) d'une manière réciproque sur le côté supérieur du sac flexible.

4. Dispositif selon la revendication 3, **caractérisé en ce que** l'élément de pression et/ou l'élément d'enroulage comprennent/comprend un rouleau.

5. Dispositif selon l'une quelconque des revendications précédentes, **caractérisé en ce qu'**un côté du sac flexible est doté d'un canal de décharge de lait refermable.

6. Dispositif selon la revendication 5, **caractérisé en ce que** le côté du sac flexible opposé au canal de décharge de lait refermable comprend un élément de suspension pour suspendre le sac flexible.

7. Dispositif selon la revendication 1 et la revendication 5, **caractérisé en ce que** l'élément de refroidissement est doté de moyens de levage pour incliner l'élément de refroidissement vers le canal de décharge du lait refermable.

8. Dispositif selon la revendication 5, la revendication 6 ou la revendication 7, **caractérisé en ce que** le côté du sac flexible étant le même côté que celui comprenant le canal de décharge de lait refermable est doté d'un canal d'alimentation de lait refermable.

9. Dispositif selon la revendication 3 ou la revendication 4, **caractérisé en ce que** l'élément de pression et/ou l'élément d'enroulage sont/est mobile(s) dans la direction du canal de décharge de lait refermable.

10. Dispositif selon la revendication 9, **caractérisé en ce que** le sac flexible présente un côté inférieur, et **en ce que** le dispositif est doté d'un dispositif de poussée pour pousser l'élément de pression et/ou l'élément d'enroulage sur ledit côté inférieur.

11. Dispositif selon l'une quelconque des revendications précédentes, **caractérisé en ce que** le sac flexible est doté de premiers éléments d'accrochage.

12. Dispositif selon la revendication 3 et la revendication 11, **caractérisé en ce que** l'élément de pression et/ou l'élément d'enroulage sont/est doté(s) de seconds éléments d'accrochage pour mettre en prise les premiers éléments d'accrochage.

13. Dispositif selon la revendication 3, **caractérisé en ce que** l'élément de pression et/ou l'élément d'enroulage sont/est doté(s) de moyens de scellement pour sceller le sac de lait flexible.

14. Dispositif selon la revendication 3, **caractérisé en ce que** l'élément de pression et/ou l'élément d'enroulage sont/est doté(s) de moyens pour introduire automatiquement un canal d'alimentation de lait et/ou un canal de décharge de lait et/ou des éléments d'accrochage dans un sac de lait.

15. Dispositif selon l'une quelconque des revendications précédentes, **caractérisé en ce que** le sac flexible est constitué d'un matériau recyclable.

16. Dispositif selon l'une quelconque des revendications précédentes, **caractérisé en ce que** le dispositif est doté d'une ligne qui peut être connectée au sac flexible, la ligne étant dotée d'un élément de commutation à trois voies et d'un récipient tampon, lequel récipient tampon est doté d'un sac tampon autoportant flexible.
